# EUROPEAN PATENT SPECIFICATION

(11) **EP 3 177 067 B1**
(45) Date of publication and mention of the grant of the patent: **29.05.2019**
(21) Application number: 14903391.2
(22) Date of filing: 30.09.2014
(51) Int. Cl.: H04W 28/16, H04W 72/04, H04W 76/10

(54) **NETWORK CONTROLLER, SYSTEM, AND METHOD FOR RESOURCE ALLOCATION**
NETZWERKSTEUERGERÄT, SYSTEM UND VERFAHREN ZUR RESSOURCENZUWEISUNG
CONTRÔLEUR DE RÉSEAU, SYSTÈME ET PROCÉDÉ D'ATTRIBUTION DE RESSOURCES

(43) Date of publication of application: 07.06.2017
(73) Proprietor: Huawei Technologies Co., Ltd., Longgang District Shenzhen, Guangdong 518129 (CN)
(72) Inventor: LIU, Yalin, Shenzhen Guangdong 518129 (CN)
(74) Representative: Pfenning, Meinig & Partner mbB
(86) International application number: PCT/CN2014/088011
(87) International publication number: WO 2016/049892

(56) References cited:
- WO-A1-2014/036327
- CN-A- 101 674 151
- CN-A- 102 724 646
- CN-A- 103 813 300
- US-A1- 2013 017 779
- HUAWEI ET AL: "Solution for the small data bearer service without using user plane RABs", 3GPP DRAFT; S2-122896, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Barcelona, Spain; 20120709 - 20120713, 3 July 2012 (2012-07-03), XP050633418, [retrieved on 2012-07-03]
- "3rd Generation Partnership Project; Technical Specification Group Core Network and Terminals; 3GPP Evolved Packet System (EPS); Evolved General Packet Radio Service (GPRS) Tunnelling Protocol for Control plane (GTPv2-C); Stage 3 (Release 10)", 3GPP STANDARD; 3GPP TS 29.274, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V10.5.0, 17 December 2011 (2011-12-17), pages 1-198, XP050554622, [retrieved on 2011-12-17]

## Description

### TECHNICAL FIELD

The present invention relates to the field of communications technologies, and in particular, to a network controller, a system, and a resource allocation method.

### BACKGROUND

With development of mobile Internet technologies, and in particular, with emergence and popularity of intelligent terminals such as a mobile phone and a tablet computer, increasingly more users directly use these terminals to access a network. In addition, with rapid development of an operating system and hardware performance of the terminal, much software that is originally used on a computer may be used on an intelligent and miniaturized mobile terminal, and especially, social software is relatively frequently used. Generally, the software belongs to instant message-type software, and a connection to a network features burstiness, timing, or the like. A type of instant message-type software is used as an example. The software sends one heartbeat packet every two minutes in an operating system of a terminal, so that the terminal periodically notifies a server of a status of the terminal. A network controller needs to transmit dozens pieces of network signaling such as access signaling and bearer setup signaling, and the network controller releases air interface resources after 7 to 15 seconds after transmission. In one month, even though a user who uses the instant message-type software does not perform any operation, the software sends 22320 heartbeat packets, and this is equivalent to consuming a signaling processing capability of sending 22320 short messages or a signaling processing capability of making more than 10 thousand calls but only to generate traffic of 1.83 megabytes.

It may be learnt that when a terminal uses instant message-type software, to maintain a connection to a server, a large amount of network signaling is generated, and the network signaling is generated only for transmitting an extremely small quantity of bytes. Even worse, the signaling may interfere with a normal service in a network. In addition, considering a development prospect of a future network, a large quantity of terminals are to be connected to the network in the future, and similar to sending an instant message, many terminals are to intermittently send data with relatively less content and a relatively short length to the network at an extremely low sending frequency. However, as a quantity of terminals increases, many network signaling resources are consumed. To enable the network to operate effectively, an effect caused by an application or a terminal to a normal service in the network when the application or the terminal accesses the network needs to be reduced. Therefore, the network needs to be capable of managing resources consumed by various different applications.

Document WO 2014/036327 A1 relates to an apparatus (e.g., a client device, an eNodeB, MME, S-GW, P-GW, UTRAN component, etc.) detecting a first transition of a client device from an active state to an idle state while the client device is allocated a Quality of Service (QoS) link by a serving network. The apparatus caches QoS information associated with the QoS link, and releases the QoS link in response to the detection of the first transition. The apparatus later detects, after the caching and releasing, a second transition of the client device from the idle state back to the active state. The apparatus re-establishes the QoS link in response to the detection of the second transition using the cached QoS information.

Document US 2013/017779 A1 also provides relevant background art.

### SUMMARY

Embodiments of the present invention provide a network controller, a system, and a resource allocation method, to resolve a problem of how to manage resource allocation in a network when application data sending of an application or a terminal may affect a normal service in the network.

A first aspect of the embodiments of the present invention provides a network controller that may include:
a receiving module, configured to receive a resource configuration request for an air interface dedicated channel sent by a base station, where the resource configuration request includes a resource request type and a base station identifier, and the dedicated channel is used for transmitting application data that is discontinuously transmitted and whose length is less than a preset threshold;
an allocation module, configured to: allocate an air interface dedicated channel resource to the base station according to information in a policy database, and send information about the air interface dedicated channel resource to the base station by using a first resource configuration message; and
a sending module, configured to: after receiving an acknowledgment message returned by the base station, send information about a network dedicated channel resource to a gateway by using a second resource configuration message, thereby enabling the application data to be transmitted from a terminal to the gateway by using the air interface dedicated channel and a network dedicated channel.

In a first possible implementation manner of the first aspect, the air interface dedicated channel resource includes a time-frequency resource and a link resource.

With reference to the first aspect, or the first possible implementation manner of the first aspect, in a second possible implementation manner, the network controller further includes:
a statistics collection module, configured to collect charging information of the air interface dedicated channel and save the charging information to the policy database, where the charging information of the air interface dedicated channel includes use duration information and use bandwidth information of the air interface dedicated channel; where
the allocation module is further configured to allocate the air interface dedicated channel resource according to the charging information of the air interface dedicated channel and a preset allocation policy in the policy database.

A second aspect of the embodiments of the present invention provides a network controller that may include:
an input apparatus, an output apparatus, a memory, and a processor; where
the memory is configured to store a program, and the processor is configured to invoke the program to perform the following steps:
   receiving a resource configuration request for an air interface dedicated channel sent by a base station, where the resource configuration request includes a resource request type and a base station identifier, and the dedicated channel is used for transmitting application data that is discontinuously transmitted and whose length is less than a preset threshold;
   allocating an air interface dedicated channel resource to the base station according to information in a policy database, and sending information about the air interface dedicated channel resource to the base station by using a first resource configuration message; and
   after receiving an acknowledgment message returned by the base station, sending information about a network dedicated channel resource to a gateway by using a second resource configuration message.

In a first possible implementation manner of the second aspect, the air interface dedicated channel resource includes a time-frequency resource and a link resource.

With reference to the second aspect or the first possible implementation manner of the second aspect, in a second possible implementation manner, the processor is further configured to perform the following steps:
collecting charging information of the air interface dedicated channel, and saving the charging information to the policy database, where the charging information of the air interface dedicated channel includes use duration information and use bandwidth information of the air interface dedicated channel; and
when the resource configuration request of the base station is received, allocating the air interface dedicated channel resource according to the charging information of the air interface dedicated channel and a preset allocation policy in the policy database.

A third aspect of the embodiments of the present invention provides a system in accordance with the fifth aspect described below, wherein the network controller further includes:
a first receiving module, configured to receive a resource configuration request for a network dedicated channel sent by the gateway, where the resource configuration request includes a resource request type and a gateway identifier;
an allocation module, configured to: allocate the network dedicated channel resource to the gateway according to information in a policy database, and send information about the network dedicated channel resource to the gateway by using a second resource configuration message; and
a second receiving module, configured to: receive an acknowledgment message returned by the gateway, and configure the network dedicated channel resource for the gateway, so that after configuring an air interface dedicated channel resource, the base station maps an air interface dedicated channel to the network dedicated channel.

In a first possible implementation manner of the third aspect, the network dedicated channel resource includes a time-frequency resource and a link resource.

With reference to the third aspect, or the first possible implementation manner of the third aspect, in a second possible implementation manner, the network controller further includes:
a statistics collection module, configured to collect charging information of the network dedicated channel and save the charging information to the policy data block library, where the allocation module is further configured to adjust allocation of the network dedicated channel resource according to the charging information of the network dedicated channel and a preset allocation policy in the policy database.

With reference to any one of the third aspect, or the first or the second possible implementation manner of the third aspect, in a third possible implementation manner, the allocation module is further configured to:
adjust, according to the network dedicated channel resource allocated to the gateway, an air interface dedicated channel resource allocated to the base station.

A fourth aspect of the embodiments of the present invention provides a system in accordance with the fifth aspect described below, wherein the network controller includes:
an input apparatus, an output apparatus, a memory, and a processor; where
the memory is configured to store a program, and the processor is configured to invoke the program to perform the following steps:
   receiving a resource configuration request for a network dedicated channel sent by a gateway, where the resource configuration request includes a resource request type and a gateway identifier;
   allocating a network dedicated channel resource to the gateway according to information in a policy database, and sending information about the network dedicated channel resource to the gateway by using a second resource configuration message; and
   receiving an acknowledgment message returned by the gateway, and configuring the network dedicated channel resource for the gateway, so that after configuring an air interface dedicated channel resource, the base station maps an air interface dedicated channel to the network dedicated channel.

In a first possible implementation manner of the fourth aspect, the network dedicated channel resource includes a time-frequency resource and a link resource.

With reference to the fourth aspect or the first possible implementation manner of the fourth aspect, in a second possible implementation manner, the processor is further configured to perform the following step:
collecting charging information of the network dedicated channel, saving the charging information to the policy data block library, and adjusting allocation of the network dedicated channel resource according to the charging information of the network dedicated channel and a preset allocation policy in the policy database.

With reference to any one of the fourth aspect, or the first or the second possible implementation manner of the fourth aspect, in a third possible implementation manner, after the processor receives an acknowledgment message returned by the gateway, and configures the network dedicated channel resource for the gateway, the processor is further configured to perform the following step:
adjusting, according to the network dedicated channel resource allocated to the gateway, an air interface dedicated channel resource allocated to the base station.

A fifth aspect of the embodiments of the present invention provides a system that may include:
a network controller according to the first aspect, a base station, a gateway, and a terminal, where
the network controller is configured to: allocate an air interface dedicated channel resource to the base station, and allocate a network dedicated channel resource to the gateway;
the base station is configured to: map an air interface dedicated channel to a network dedicated channel, and notify the terminal of configuration information of the air interface dedicated channel;
the terminal is configured to send, to the base station by using the air interface dedicated channel and the network dedicated channel, application data that is discontinuously transmitted and whose length is less than a preset threshold; and
the gateway is configured to: receive the application data forwarded by the base station, and transmit the application data to a service provider.

A sixth aspect of the embodiments of the present invention provides a resource allocation method that may include:
receiving a resource configuration request for an air interface dedicated channel sent by a base station, where the resource configuration request includes a resource request type and a base station identifier, and the dedicated channel is used for transmitting application data that is discontinuously transmitted and whose length is less than a preset threshold;
allocating an air interface dedicated channel resource to the base station according to information in a policy database, and sending information about the air interface dedicated channel resource to the base station by using a first resource configuration message;
after receiving an acknowledgment message returned by the base station, sending information about a network dedicated channel resource to a gateway by using a second resource configuration message; and
transmitting, by using the air interface dedicated channel and a network dedicated channel, the application data from a terminal to the gateway.

In a first possible implementation manner of the sixth aspect, the air interface dedicated channel resource includes a time-frequency resource and a link resource.

With reference to the sixth aspect, or a first possible implementation manner of the sixth aspect, in a second possible implementation manner, before the allocating an air interface dedicated channel resource to the base station according to information in a policy database, and sending information about the air interface dedicated channel resource to the base station by using a first resource configuration message, the method further includes:
collecting charging information of the air interface dedicated channel, and saving the charging information to the policy database, where the charging information of the air interface dedicated channel includes use duration information and use bandwidth information of the air interface dedicated channel; and
when the resource configuration request of the base station is received, allocating the air interface dedicated channel resource according to the charging information of the air interface dedicated channel and a preset allocation policy in the policy database.

A seventh aspect of the embodiments of the present invention provides a computer storage medium, the computer storage medium stores a program, and when being performed, the program includes all or some of the steps of the resource allocation method provided in the sixth aspect of the embodiments of the present invention.

An eighth aspect of the embodiments of the present invention provides a resource allocation method in accord with to the sixth aspect that may further include:
receiving, by a first receiving module of a network controller, a resource configuration request for a network dedicated channel sent by a gateway, where the resource configuration request includes a resource request type and a gateway identifier;
allocating, by an allocating module of the network controller, a network dedicated channel resource to the gateway according to information in a policy database, and sending information about the network dedicated channel resource to the gateway by using a second resource configuration message; and
receiving, by a second receiving module of the network controller, an acknowledgment message returned by the gateway, and configuring the network dedicated channel resource for the gateway, so that after configuring an air interface dedicated channel resource, the base station maps an air interface dedicated channel to the network dedicated channel.

In a first possible implementation manner of the eighth aspect, the network dedicated channel resource includes a time-frequency resource and a link resource.

With reference to the eighth aspect or the first possible implementation manner of the eighth aspect, in a second possible implementation manner, the method further includes:
collecting charging information of the network dedicated channel, saving the charging information to the policy data block library, and adjusting allocation of the network dedicated channel resource according to the charging information of the network dedicated channel and a preset allocation policy in the policy database.

With reference to any one of the eighth aspect, or the first or the second possible implementation manner of the eighth aspect, in a third possible implementation manner, after the receiving an acknowledgment message returned by the gateway, and configuring the network dedicated channel resource for the gateway, the method further includes:
adjusting, according to the network dedicated channel resource allocated to the gateway, an air interface dedicated channel resource allocated to the base station.

A ninth aspect of the embodiments of the present invention provides a computer storage medium, the computer storage medium stores a program, and when being performed, the program includes all or some of the steps of the resource allocation method provided in the eighth aspect of the embodiments of the present invention.

The following beneficial effects are achieved by implementing the embodiments of present invention:

A resource configuration request initiated by a base station is received, an air interface dedicated channel resource is allocated to the base station according to information in a policy database, and after the resource is configured for the base station, a resource is configured for a gateway. Therefore, a terminal can transmit, by using an air interface dedicated channel and a network dedicated channel, application data that is discontinuously transmitted and whose length is less than a preset threshold. In this way, the terminal can directly transmit the application data without a need to set up a connection to the base station by means of complex signaling interaction, and does not need to occupy a large quantity of signaling resources and air interface resources. By properly managing resource allocation in a network, the terminal or an application does not affect a normal service in the network when sending the application data.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic structural diagram of an embodiment of a network controller according to an embodiment of the present invention;
FIG. 2 is a schematic structural diagram of another embodiment of a network controller according to an embodiment of the present invention;
FIG. 3 is a schematic structural diagram of a third embodiment of a network controller according to an embodiment of the present invention;
FIG. 4 is a schematic structural diagram of a fourth embodiment of a network controller according to an embodiment of the present invention;
FIG. 5 is a schematic structural diagram of a fifth embodiment of a network controller according to an embodiment of the present invention;
FIG. 6 is a schematic structural diagram of a sixth embodiment of a network controller according to an embodiment of the present invention;
FIG. 7 is a schematic structural diagram of a system according to an embodiment of the present invention;
FIG. 8 is a schematic flowchart of an embodiment of a resource allocation method according to an embodiment of the present invention; and
FIG. 9 is a schematic flowchart of another embodiment of a resource allocation method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

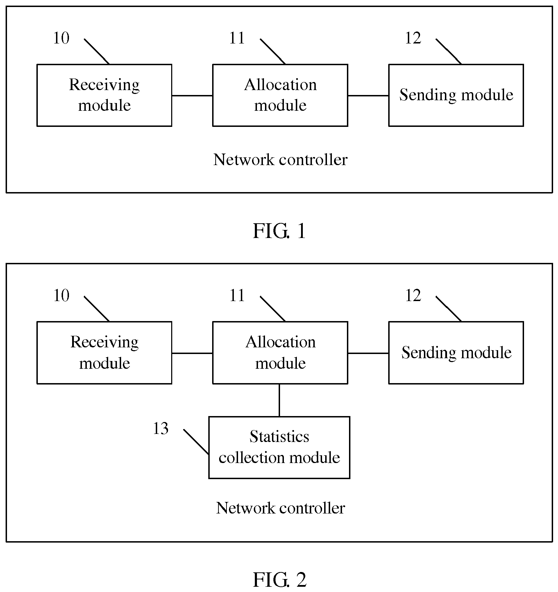

Referring to FIG. 1, FIG. 1 is a schematic composition diagram of an embodiment of a network controller according to an embodiment of the present invention. In this embodiment, the network controller includes a receiving module 10, an allocation module 11, and a sending module 12.

The receiving module 11 is configured to receive a resource configuration request for an air interface dedicated channel sent by a base station, and the resource configuration request includes a resource request type and a base station identifier.

The dedicated channel is used for transmitting application data that is discontinuously transmitted and whose length is less than a preset threshold. The resource configuration request may be sent by the base station when the base station is initially configured, when there is no sufficient air interface dedicated channel resource, or when there are excessive air interface dedicated channel resources. The resource request type includes an initial resource request, a resource increase request, and a resource reduce request.

In an implementation manner, the base station may further add an identifier of the air interface dedicated channel, magnitude of requested bandwidth, or the like to the resource configuration request. In this way, the base station can present a configuration requirement of the base station to the network controller, so that the network controller allocates resources in an optimal manner to make full use of the resources and improve transmission efficiency of an entire system.

No sufficient resource herein means that when a terminal needs to transmit application data by using an air interface dedicated channel, an existing air interface dedicated channel resource is occupied, or there are relatively few resources, and consequently, the application data cannot be transmitted. Similarly, the excessive resources herein mean that when a terminal needs to transmit application data by using an air interface dedicated channel, an existing air interface dedicated channel resource is idle, or resources that are required for completing the transmission are less than resources that have been currently allocated by the base station. In this case, the base station may send a corresponding resource configuration request, to make full use of the resources and improve system efficiency.

The allocation module 12 is configured to: allocate an air interface dedicated channel resource to the base station according to information in a policy database, and send information about the air interface dedicated channel resource to the base station by using a first resource configuration message.

The air interface dedicated channel resource includes a time-frequency resource and a link resource.

In an implementation manner, the policy database may be stored on the network controller as an assembly. Certainly, the policy database may be stored on an external server, and the network controller initiates a request to obtain the information in the policy database.

In addition, the information in the policy database may include a preset allocation policy, for example, a policy of performing allocation based on a resource use status in an entire network, a policy of performing allocation according to a capacity of an entire system, or a policy according to a network profit. Certainly, allocation may be performed with reference to a resource requirement that may be added to the resource configuration request by the base station. This is not limited herein.

The sending module 13 is configured to: after receiving an acknowledgment message returned by the base station, send information about a network dedicated channel resource to a gateway by using a second resource configuration message, so that the terminal transmits, to the gateway by using the air interface dedicated channel and a network dedicated channel, the application data that is discontinuously transmitted and whose length is less than the preset threshold.

The application data that is discontinuously transmitted and whose length is less than the preset threshold includes application signaling that is discontinuously transmitted and whose length is less than the preset threshold and/ or a group that is discontinuously transmitted and whose length is less than the preset threshold.

A resource configuration request initiated by a base station is received, an air interface dedicated channel resource is allocated to the base station according to information in a policy database, and after the resource is configured for the base station, a resource is configured for a gateway. Therefore, a terminal can transmit, by using an air interface dedicated channel and a network dedicated channel, application data that is discontinuously transmitted and whose length is less than a preset threshold. In this way, the terminal can directly transmit the application data without a need to set up a connection to the base station by means of complex signaling interaction, and does not need to occupy a large quantity of signaling resources and air interface resources. By properly managing resource allocation in a network, the terminal or an application does not affect a normal service in the network when sending the application data.

Referring to FIG. 2, FIG. 2 is a schematic composition diagram of another embodiment of a network controller according to an embodiment of the present invention. Relative to the embodiment shown in FIG. 1, in this embodiment, the network controller further includes:
a statistics collection module 13, configured to collect charging information of the air interface dedicated channel and save the charging information to the policy database. The charging information of the air interface dedicated channel includes use duration information and use bandwidth information of the air interface dedicated channel. Therefore, when the receiving module 10 receives the resource configuration request of the base station, the allocation module 11 allocates the air interface dedicated channel resource according to the charging information of the air interface dedicated channel and a preset allocation policy in the policy database.

When the resource configuration request of the base station is received, allocation may be performed according to the charging information and the preset allocation policy. This allocation manner still needs to be triggered by the resource configuration request, and belongs to passive allocation.

Alternatively, the statistics collection module 13 is configured to collect charging information of the air interface dedicated channel and save the charging information to the policy database. The allocation module 11 is further configured to adjust allocation of the air interface dedicated channel resource according to the charging information of the air interface dedicated channel and a preset allocation policy in the policy database.

This allocation manner does not need to be triggered by a base station side, and the network controller may adjust resource allocation at the base station side or reallocate a resource to the base station side according to the charging information. This allocation manner belongs to active allocation.

In both the passive allocation and the active allocation, the charging information needs to be considered. For example, if traffic usage (may be calculated by using use duration and use bandwidth) of the air interface dedicated channel exceeds a specific value, a resource may not be added to the channel any longer and a request is refused. For another example, if use bandwidth of the air interface dedicated channel is relatively small, and use duration is relatively short, the resource may be actively recycled, and is allocated to another base station that requires a resource.

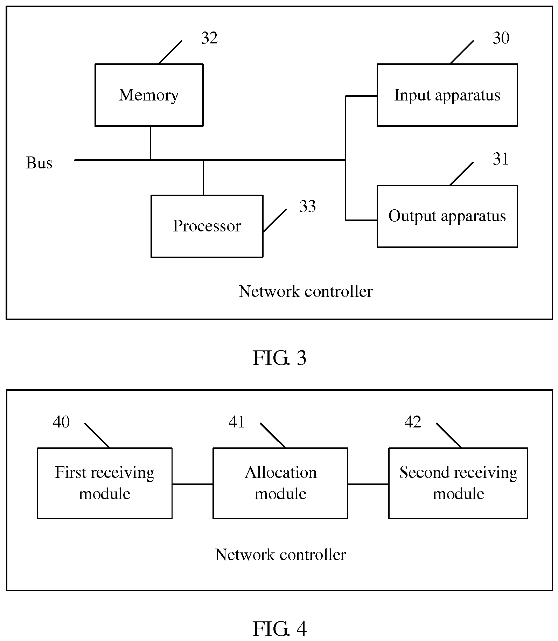

Referring to FIG. 3, FIG. 3 is a schematic composition diagram of a third embodiment of a network controller according to an embodiment of the present invention. In this embodiment, the network controller includes:
an input apparatus 30, an output apparatus 31, a memory 32, and a processor 33.

The input apparatus 30, the output apparatus 31, the memory 32, and the processor 33 are connected by using a bus.

The memory 32 is configured to store a program, and the processor 33 is configured to invoke the program to perform the following steps:
receiving a resource configuration request for an air interface dedicated channel sent by a base station, where the resource configuration request includes a resource request type and a base station identifier, and the dedicated channel is used for transmitting application data that is discontinuously transmitted and whose length is less than a preset threshold;
allocating an air interface dedicated channel resource to the base station according to information in a policy database, and sending information about the air interface dedicated channel resource to the base station by using a first resource configuration message; and
after receiving an acknowledgment message returned by the base station, sending information about a network dedicated channel resource to a gateway by using a second resource configuration message, so that a terminal transmits, to the gateway by using the air interface dedicated channel and a network dedicated channel, application data that is discontinuously transmitted and whose length is less than a preset threshold.

The air interface dedicated channel resource includes a time-frequency resource and a link resource.

The resource configuration request is sent by the base station when the base station is initially configured, when there is no sufficient air interface dedicated channel resource, or when there are excessive air interface dedicated channel resources. The resource request type includes an initial resource request, a resource increase request, and a resource reduce request.

The processor 33 is further configured to perform the following step:
collecting charging information of the air interface dedicated channel, and saving the charging information to the policy database, where the charging information of the air interface dedicated channel includes use duration information and use bandwidth information of the air interface dedicated channel, so that when the resource configuration request of the base station is received, the air interface dedicated channel resource is allocated according to the charging information of the air interface dedicated channel and a preset allocation policy in the policy database.

Alternatively, the processor 33 is further configured to perform the following step:
collecting charging information of the air interface dedicated channel, saving the charging information to the policy database, and adjusting allocation of the air interface dedicated channel resource according to the charging information of the air interface dedicated channel and a preset allocation policy in the policy database.

The application data that is discontinuously transmitted and whose length is less than the preset threshold includes application signaling that is discontinuously transmitted and whose length is less than the preset threshold and/ or a group that is discontinuously transmitted and whose length is less than the preset threshold.

Referring to FIG. 4, FIG. 4 is a schematic composition diagram of a fourth embodiment of a network controller according to an embodiment of the present invention. In this embodiment, the network controller includes a first receiving module 40, an allocation module 41, and a second receiving module 42:

The first receiving module 41 is configured to receive a resource configuration request for a network dedicated channel sent by a gateway, and the resource configuration request includes a resource request type and a gateway identifier.

The resource configuration request may be sent by the gateway when the gateway is initially configured, when there is no sufficient network dedicated channel resource, or when there are excessive network dedicated channel resources. The resource request type includes an initial resource request, a resource increase request, and a resource reduce request.

The allocation module 42 is configured to: allocate a network dedicated channel resource to the gateway according to information in a policy database, and send information about the network dedicated channel resource to the gateway by using a second resource configuration message.

The network dedicated channel resource includes a time-frequency resource and a link resource.

Resource configuration information may specifically include bandwidth, a transmission priority, traffic configuration, a charging control policy, or the like.

The second receiving module 43 is configured to: receive an acknowledgment message returned by the gateway, and configure the network dedicated channel resource for the gateway, so that after configuring an air interface dedicated channel resource, the base station maps an air interface dedicated channel to the network dedicated channel.

The application data that is discontinuously transmitted and whose length is less than a preset threshold includes application signaling that is discontinuously transmitted and whose length is less than the preset threshold and/ or a group that is discontinuously transmitted and whose length is less than the preset threshold.

After both resource configuration for the gateway and resource configuration at a base station side are completed, the base station may map the air interface dedicated channel to the network dedicated channel, so that a terminal may transmit the application data by using the air interface dedicated channel and the network dedicated channel.

In an implementation manner, the allocation module 42 is further configured to:
adjust, according to the network dedicated channel resource allocated to the gateway, an air interface dedicated channel resource allocated to the base station.

Specifically, a newly-configured network dedicated channel may be included, and the network controller needs to configure the base station. If the network controller increases resources for a gateway, a resource allocated to an air interface of each base station may need to be adjusted correspondingly. If resources of a gateway are reduced, a resource may not be reallocated to an air interface, or a resource may be reallocated to an air interface. This is not limited herein.

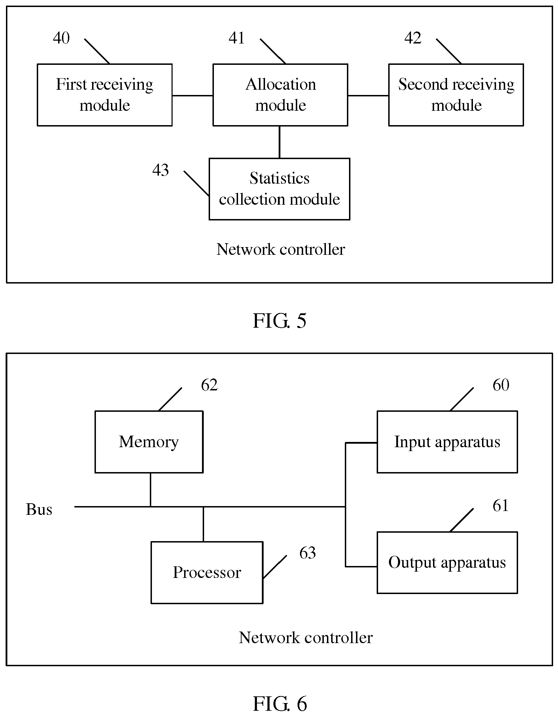

Referring to FIG. 5, FIG. 5 is a schematic composition diagram of a fifth embodiment of a network controller according to an embodiment of the present invention. A difference from the embodiment shown in FIG. 4 is that the network controller in this embodiment further includes:
a statistics collection module 43, configured to collect charging information of the network dedicated channel and save the charging information to the policy data block library, where the charging information of the air interface dedicated channel includes use duration information and use bandwidth information of the air interface dedicated channel, so that when the first receiving module 40 receives the resource configuration request of the gateway, the allocation module 41 allocates the network dedicated channel resource according to the charging information of the network dedicated channel and a preset allocation policy in the policy database. Therefore, passive allocation with reference to the charging information and the allocation policy is implemented.

Alternatively, the statistics collection module 43 is configured to collect charging information of the network dedicated channel and save the charging information to the policy data block library. The allocation module is further configured to adjust allocation of the network dedicated channel resource according to the charging information of the network dedicated channel and a preset allocation policy in the policy database. Therefore, active allocation with reference to the charging information and the allocation policy is implemented.

Referring to FIG. 6, FIG. 6 is a schematic composition diagram of a sixth embodiment of a network controller according to an embodiment of the present invention. In this embodiment, the network controller includes:
an input apparatus 60, an output apparatus 61, a memory 62, and a processor 63.

The input apparatus 60, the output apparatus 61, the memory 62, and the processor 63 are connected by using a bus.

The memory 62 is configured to store a program, and the processor 63 is configured to invoke the program to perform the following steps:
receiving a resource configuration request for a network dedicated channel sent by a gateway, where the resource configuration request includes a resource request type and a gateway identifier;
allocating a network dedicated channel resource to the gateway according to information in a policy database, and sending information about the network dedicated channel resource to the gateway by using a second resource configuration message; and
receiving an acknowledgment message returned by the gateway, and configuring the network dedicated channel resource for the gateway, so that after configuring an air interface dedicated channel resource, the base station maps an air interface dedicated channel to the network dedicated channel.

The network dedicated channel resource includes a time-frequency resource and a link resource.

The resource configuration request is sent by the gateway when the gateway is initially configured, when there is no sufficient network dedicated channel resource, or when there are excessive network dedicated channel resources. The resource request type includes an initial resource request, a resource increase request, and a resource reduce request.

The processor 63 is further configured to perform the following step:
collecting charging information of the network dedicated channel, and saving the charging information to the policy data block library, where the charging information of the air interface dedicated channel includes use duration information and use bandwidth information of the air interface dedicated channel, so that when the resource configuration request of the gateway is received, the network dedicated channel resource is allocated according to the charging information of the network dedicated channel and a preset allocation policy in the policy database.

Alternatively, the processor 63 is further configured to perform the following step:
collecting charging information of the network dedicated channel, saving the charging information to the policy data block library, and adjusting allocation of the network dedicated channel resource according to the charging information of the network dedicated channel and a preset allocation policy in the policy database.

After the processor 63 receives an acknowledgment message returned by the gateway, and configures the network dedicated channel resource for the gateway, the processor 63 is further configured to perform the following step:
adjusting, according to the network dedicated channel resource allocated to the gateway, an air interface dedicated channel resource allocated to the base station.

The application data that is discontinuously transmitted and whose length is less than a preset threshold includes application signaling that is discontinuously transmitted and whose length is less than the preset threshold and/ or a group that is discontinuously transmitted and whose length is less than the preset threshold.

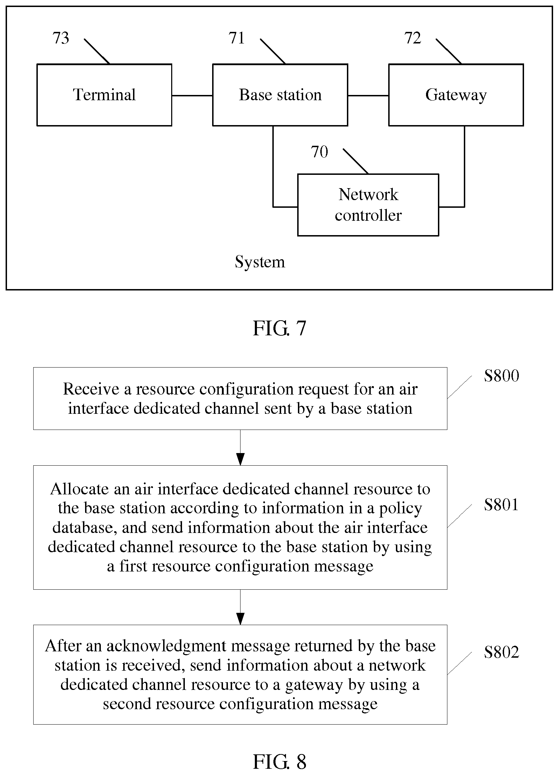

Referring to FIG. 7, FIG. 7 is a schematic composition diagram of a system according to an embodiment of the present invention. In this embodiment, the system includes a network controller 70, a base station 71, a gateway 72, and a terminal 73.

The network controller 70 is configured to: allocate an air interface dedicated channel resource to the base station 71, and allocate a network dedicated channel resource to the gateway 72.

The base station 71 is configured to: map an air interface dedicated channel to a network dedicated channel, and notify the terminal 73 of configuration information of the air interface dedicated channel.

The terminal 73 is configured to send, to the base station 71 by using the air interface dedicated channel and the network dedicated channel, application data that is discontinuously transmitted and whose length is less than a preset threshold.

The gateway 72 is configured to: receive the application data forwarded by the base station 71, and transmit the application data to a service provider.

Referring to FIG. 8, FIG. 8 is a schematic flowchart of an embodiment of a resource allocation method according to an embodiment of the present invention.

S800. Receive a resource configuration request for an air interface dedicated channel sent by a base station.

The resource configuration request includes a resource request type and a base station identifier. The dedicated channel is used for transmitting application data that is discontinuously transmitted and whose length is less than a preset threshold.

The resource configuration request is sent by the base station when the base station is initially configured, when there is no sufficient air interface dedicated channel resource, or when there are excessive air interface dedicated channel resources. The resource request type includes an initial resource request, a resource increase request, and a resource reduce request.

S801. Allocate an air interface dedicated channel resource to the base station according to information in a policy database, and send information about the air interface dedicated channel resource to the base station by using a first resource configuration message.

The air interface dedicated channel resource includes a time-frequency resource and a link resource.

S802. After an acknowledgment message returned by the base station is received, send information about a network dedicated channel resource to a gateway by using a second resource configuration message, so that a terminal transmits, to the gateway by using the air interface dedicated channel and a network dedicated channel, application data that is discontinuously transmitted and whose length is less than a preset threshold.

The application data that is discontinuously transmitted and whose length is less than a preset threshold includes application signaling that is discontinuously transmitted and whose length is less than the preset threshold and/ or a group that is discontinuously transmitted and whose length is less than the preset threshold.

In an implementation manner, before the allocating an air interface dedicated channel resource to the base station according to information in a policy database, and sending information about the air interface dedicated channel resource to the base station by using a first resource configuration message, the method further includes:
collecting charging information of the air interface dedicated channel, and saving the charging information to the policy database, where the charging information of the air interface dedicated channel includes use duration information and use bandwidth information of the air interface dedicated channel, so that when the resource configuration request of the base station is received, the air interface dedicated channel resource is allocated according to the charging information of the air interface dedicated channel and a preset allocation policy in the policy database.

Alternatively, the method further includes:
collecting charging information of the air interface dedicated channel, saving the charging information to the policy database, and adjusting allocation of the air interface dedicated channel resource according to the charging information of the air interface dedicated channel and a preset allocation policy in the policy database.

Another aspect of the embodiments of the present invention provides a computer storage medium. The computer storage medium stores a program, and when being executed, the program includes any step described in the method embodiment shown in FIG. 8.

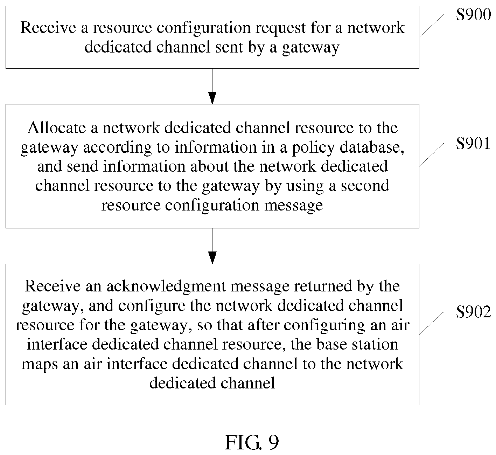

Referring to FIG. 9, FIG. 9 is a schematic flowchart of another embodiment of a resource allocation method according to an embodiment of the present invention.

S900. Receive a resource configuration request for a network dedicated channel sent by a gateway.

The resource configuration request includes a resource request type and a gateway identifier.

The resource configuration request is sent by the gateway when the gateway is initially configured, when there is no sufficient network dedicated channel resource, or when there are excessive network dedicated channel resources. The resource request type includes an initial resource request, a resource increase request, and a resource reduce request.

S901. Allocate a network dedicated channel resource to the gateway according to information in a policy database, and send information about the network dedicated channel resource to the gateway by using a second resource configuration message.

The network dedicated channel resource includes a time-frequency resource and a link resource.

S902. Receive an acknowledgment message returned by the gateway, and configure the network dedicated channel resource for the gateway, so that after configuring an air interface dedicated channel resource, the base station maps an air interface dedicated channel to the network dedicated channel.

The application data that is discontinuously transmitted and whose length is less than a preset threshold includes application signaling that is discontinuously transmitted and whose length is less than the preset threshold and/ or a group that is discontinuously transmitted and whose length is less than the preset threshold.

In an implementation manner, before the allocating a network dedicated channel resource to the gateway according to information in a policy database, and sending information about the network dedicated channel resource to the gateway by using a second resource configuration message, the method further includes:
collecting charging information of the network dedicated channel and saving the charging information to the policy data block library, where the charging information of the air interface dedicated channel includes use duration information and use bandwidth information of the air interface dedicated channel, so that when the resource configuration request of the gateway is received, the network dedicated channel resource is allocated according to the charging information of the network dedicated channel and a preset allocation policy in the policy database.

Alternatively, the method further includes:
collecting charging information of the network dedicated channel, saving the charging information to the policy data block library, and adjusting allocation of the network dedicated channel resource according to the charging information of the network dedicated channel and a preset allocation policy in the policy database.

In an implementation manner, after the receiving an acknowledgment message returned by the gateway, and configuring the network dedicated channel resource for the gateway, the method further includes:
adjusting, according to the network dedicated channel resource allocated to the gateway, an air interface dedicated channel resource allocated to the base station.

Another aspect of the embodiments of the present invention provides a computer storage medium. The computer storage medium stores a program, and when being executed, the program includes any step described in the method embodiment shown in FIG. 9.

According to the description of the foregoing embodiments, the present invention has the following advantages:

A resource configuration request initiated by a base station is received, an air interface dedicated channel resource is allocated to the base station according to information in a policy database, and after the resource is configured for the base station, a resource is configured for a gateway. Therefore, a terminal can transmit, by using an air interface dedicated channel and a network dedicated channel, application data that is discontinuously transmitted and whose length is less than a preset threshold. In this way, the terminal can directly transmit the application data without a need to set up a connection to the base station by means of complex signaling interaction, and does not need to occupy a large quantity of signaling resources and air interface resources. By properly managing resource allocation in a network, the terminal or an application does not affect a normal service in the network when sending the application data.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The network controller, system, and resource allocation method provided in the embodiments of the present invention are described in detail above. The principle and implementation manners of the present invention are described herein by using specific examples. The description about the embodiments is merely used to help understand the method and core ideas of the present invention. In addition, persons of ordinary skill in the art can make modifications in terms of the specific implementations and application scopes according to the ideas of the present invention. Therefore, the content of specification shall not be construed as a limit to the present invention.

## Claims

1. A network controller (70), comprising:
a receiving module (10), configured to receive a resource configuration request for an air interface dedicated channel sent by a base station, wherein the resource configuration request comprises a resource request type and a base station identifier, and the dedicated channel is used for transmitting application data that is discontinuously transmitted and whose length is less than a preset threshold;
an allocation module (11), configured to: allocate an air interface dedicated channel resource to the base station according to information in a policy database, and send information about the air interface dedicated channel resource to the base station by using a first resource configuration message; and
a sending module (12), configured to: after receiving an acknowledgment message returned by the base station, send information about a network dedicated channel resource to a gateway by using a second resource configuration message, thereby enabling the application data to be transmitted from a terminal to the gateway by using the air interface dedicated channel and a network dedicated channel.

2. The network controller (70) according to claim 1, wherein the air interface dedicated channel resource comprises a time-frequency resource and a link resource.

3. The network controller (70) according to claim 1 or 2, wherein the network controller (70) further comprises:
a statistics collection module (13), configured to collect charging information of the air interface dedicated channel and save the charging information to the policy database, wherein the charging information of the air interface dedicated channel comprises use duration information and use bandwidth information of the air interface dedicated channel; wherein
the allocation module (11) is further configured to allocate the air interface dedicated channel resource according to the charging information of the air interface dedicated channel and a preset allocation policy in the policy database.

4. A system, comprising the network controller (70) according to one of the preceding claims 1-3, a base station (71), a gateway (72), and a terminal (73), wherein
the base station (71) is configured to: map an air interface dedicated channel to a network dedicated channel, and notify the terminal (73) of configuration information of the air interface dedicated channel;
the terminal (73) is configured to send, to the base station (71) by using the air interface dedicated channel and the network dedicated channel, application data that is discontinuously transmitted and whose length is less than a preset threshold; and
the gateway (72) is configured to: receive the application data forwarded by the base station (71), and transmit the application data to a service provider.

5. The system according to claim 4, wherein the network controller (70) comprises:
a first receiving module (40), configured to receive a resource configuration request for a network dedicated channel sent by the gateway, wherein the resource configuration request comprises a resource request type and a gateway identifier;
an allocation module (41), configured to: allocate the network dedicated channel resource to the gateway according to information in a policy database, and send information about the network dedicated channel resource to the gateway by using a second resource configuration message; and
a second receiving module (42), configured to: receive an acknowledgment message returned by the gateway, and configure the network dedicated channel resource for the gateway.

6. The system according to claim 5, wherein the network dedicated channel resource comprises a time-frequency resource and a link resource.

7. The system according to either claim 5 or claim 6, wherein the network controller (70) further comprises:
a statistics collection module (43), configured to collect charging information of the network dedicated channel and save the charging information to the policy data block library, wherein the allocation module (41) is further configured to adjust allocation of the network dedicated channel resource according to the charging information of the network dedicated channel and a preset allocation policy in the policy database.

8. The system according to any one of claims 5 to 7, wherein the allocation module (41) is further configured to:
adjust, according to the network dedicated channel resource allocated to the gateway, an air interface dedicated channel resource allocated to the base station.

9. A resource allocation method, comprising:
receiving (S800) a resource configuration request for an air interface dedicated channel sent by a base station (71), wherein the resource configuration request comprises a resource request type and a base station identifier, and the dedicated channel is used for transmitting application data that is discontinuously transmitted and whose length is less than a preset threshold;
allocating (S801) an air interface dedicated channel resource to the base station (71) according to information in a policy database, and sending information about the air interface dedicated channel resource to the base station (71) by using a first resource configuration message;
after receiving an acknowledgment message returned by the base station (71), sending (S802) information about a network dedicated channel resource to a gateway (72) by using a second resource configuration message; and
transmitting, by using the air interface dedicated channel and a network dedicated channel, the application data from a terminal to the gateway.

10. The method according to claim 9, wherein
the air interface dedicated channel resource comprises a time-frequency resource and a link resource.

11. The method according to claim 9 or 10, before the allocating an air interface dedicated channel resource to the base station (71) according to information in a policy database, and sending information about the air interface dedicated channel resource to the base station (71) by using a first resource configuration message, further comprising:
collecting charging information of the air interface dedicated channel, and saving the charging information to the policy database, wherein the charging information of the air interface dedicated channel comprises use duration information and use bandwidth information of the air interface dedicated channel; and
when the resource configuration request of the base station is received, allocating the air interface dedicated channel resource according to the charging information of the air interface dedicated channel and a preset allocation policy in the policy database.

12. The resource allocation method according to any of claims 9-11, further, comprising:
receiving (S900), by a first receiving module (40) of a network controller (70), a resource configuration request for a network dedicated channel sent by a gateway (72), wherein the resource configuration request comprises a resource request type and a gateway identifier;
allocating (S901), by an allocating module (41) of the network controller (70), a network dedicated channel resource to the gateway (72) according to information in a policy database, and sending information about the network dedicated channel resource to the gateway (72) by using a second resource configuration message; and
receiving (S902), by a second receiving module (42) of the network controller (70), an acknowledgment message returned by the gateway (72), and configuring the network dedicated channel resource for the gateway (72).

13. The method according to claim 12, wherein the network dedicated channel resource comprises a time-frequency resource and a link resource.

14. A computer storage medium, wherein the computer storage medium stores a program, and when being executed, the program performs the steps described in any one of claims 9 to 13 when run on a computer.

## Patentansprüche

1. Netzwerksteuerung (70), umfassend:
ein Empfangsmodul (10), das zum Empfangen einer von einer Basisstation gesendeten Ressourcenkonfigurationsanforderung für einen dedizierten Kanal einer Luftschnittstelle ausgelegt ist, wobei die Ressourcenkonfigurationsanforderung einen Ressourcenanforderungstyp und eine Basisstationskennung umfasst, und der dedizierte Kanal zum Übertragen von Anwendungsdaten verwendet wird, die diskontinuierlich übertragen werden und deren Länge kleiner als ein vorgegebener Schwellenwert ist;
ein Zuweisungsmodul (11), das zum Zuweisen einer dedizierte Kanalressource der Luftschnittstelle an die Basisstation gemäß den Informationen in einer Richtliniendatenbank ausgelegt ist, und Informationen über die dedizierte Kanalressource der Luftschnittstelle an die Basisstation unter Verwendung einer ersten Ressourcenkonfigurationsmeldung sendet; und
ein Sendemodul (12), das zum Senden von Informationen über eine dedizierte Kanalressource eines Netzwerks an ein Gateway unter Verwendung einer zweiten Ressourcenkonfigurationsmeldung nach dem Empfangen einer von der Basisstation zurückgegebenen Bestätigungsmeldung ausgelegt ist, wodurch die Anwendungsdaten von einem Terminal an das Gateway unter Verwendung des dedizierten Kanals einer Luftschnittstelle und eines dedizierte Kanals eines Netzwerks übertragen werden können.

2. Netzwerksteuerung (70) nach Anspruch 1, wobei die für die dedizierte Kanalressource der Luftschnittstelle eine Zeit-Frequenz-Ressource und eine Link-Ressource umfasst.

3. Die Netzwerksteuerung (70) nach Anspruch 1 oder 2, wobei die Netzwerksteuerung (70) ferner umfasst:
ein Statistiksammelmodul (13), das zum Sammeln von Gebühreninformationen des dedizierten Kanals einer Luftschnittstelle und zum Speichern der Gebühreninformationen in der Richtliniendatenbank ausgelegt ist, wobei die Gebühreninformationen des dedizierten Kanals einer Luftschnittstelle Nutzungsdauerinformationen und Nutzungsbandbreiteninformationen des dedizierten Kanals einer Luftschnittstelle umfassen; wobei
das Zuweisungsmodul (11) ferner zum Zuweisen der dedizierten Kanalressource der Luftschnittstelle gemäß den Gebühreninformationen des dedizierten Kanals einer Luftschnittstelle und einer voreingestellten Zuweisungsrichtlinie in der Richtlinien-Datenbank ausgelegt ist.

4. System, umfassend die Netzwerksteuerung (70) gemäß einem der vorhergehenden Ansprüche 1-3, eine Basisstation (71), ein Gateway (72) und ein Terminal (73), wobei
die Basisstation (71) zum Zuordnen eines dedizierten Kanals einer Luftschnittstelle zu einem dedizierten Kanal eines Netzwerks ausgelegt ist, und zum Benachrichtigen des Terminals (73) über Konfigurationsinformationen des dedizierten Kanals einer Luftschnittstelle;
das Terminal (73) zum Senden von Anwendungsdaten, die diskontinuierlich übertragen werden und deren Länge kleiner als ein vorgegebener Schwellenwert ist, an die Basisstation (71) unter Verwendung des dedizierten Kanals einer Luftschnittstelle und des dedizierte Kanals eines Netzwerks ausgelegt ist; und
das Gateway (72) zum Empfangen der von der Basisstation (71) weitergeleiteten Anwendungsdaten und zum Übertragen der Anwendungsdaten an einen Dienstanbieter ausgelegt ist.

5. System nach Anspruch 4, wobei die Netzwerksteuerung (70) umfasst:
ein erstes Empfangsmodul (40), das zum Empfangen einer Ressourcenkonfigurationsanforderung für einen vom Gateway gesendeten dedizierten Kanal eines Netzwerks ausgelegt ist, wobei die Ressourcenkonfigurationsanforderung einen Ressourcenanforderungstyp und eine Gateway-Kennung umfasst;
ein Zuweisungsmodul (41), das zum Zuweisen der dedizierten Kanalressource eines Netzwerks zu dem Gateway gemäß Informationen in einer Richtliniendatenbank und zum Senden von Informationen über die dedizierte Kanalressource eines Netzwerks zu dem Gateway unter Verwendung einer zweiten Ressourcenkonfigurationsmeldung ausgelegt ist; und
ein zweites Empfangsmodul (42), ausgelegt zum Empfangen einer vom Gateway zurückgegebenen Bestätigungsmeldung und zum Gestalten der dedizierten Kanalressource eines Netzwerks für das Gateway.

6. System nach Anspruch 5, wobei die dedizierte Kanalressource eines Netzwerks eine Zeit-Frequenz-Ressource und eine Link-Ressource umfasst.

7. System nach entweder Anspruch 5 oder Anspruch 6, wobei die Netzwerksteuerung (70) ferner umfasst:
ein Statistiksammlungsmodul (43), das zum Sammeln von Gebühreninformationen des dedizierte Kanals eines Netzwerks und zum Speichern der Gebühreninformationen in der Richtliniendatenblockbibliothek ausgelegt ist, wobei das Zuweisungsmodul (41) ferner zum Anpassen der Zuweisung der dedizierten Kanalressource eines Netzwerks gemäß den Gebühreninformationen des dedizierte Kanals eines Netzwerks und einer voreingestellten Zuweisungsrichtlinie in der Richtliniendatenbank ausgelegt ist.

8. System nach einem der Ansprüche 5 bis 7, wobei das Zuordnungsmodul (41) ferner ausgelegt ist zum:
Anpassen, gemäß der dem Gateway zugewiesenen dedizierten Kanalressource eines Netzwerks, einer der Basisstation zugewiesenen, dedizierte Kanalressource der Luftschnittstelle.

9. Verfahren zur Ressourcenzuweisung, umfassend:
Empfangen (S800) einer Ressourcenkonfigurationsanforderung für einen von einer Basisstation (71) gesendeten dedizierten Kanal einer Luftschnittstelle, wobei die Ressourcenkonfigurationsanforderung einen Ressourcenanforderungstyp und eine Basisstationskennung umfasst, und der dedizierte Kanal zum Senden von Anwendungsdaten verwendet wird, die diskontinuierlich übertragen werden und deren Länge kleiner als ein voreingestellter Schwellenwert ist;
Zuweisen (S801) einer dedizierte Kanalressource der Luftschnittstelle an die Basisstation (71) gemäß Informationen in einer Richtliniendatenbank und Senden von Informationen über die dedizierte Kanalressource der Luftschnittstelle an die Basisstation (71) unter Verwendung einer ersten Ressourcenkonfigurationsmeldung;
nach dem Empfangen einer Bestätigungsmeldung, die von der Basisstation (71) zurückgegeben wird, Senden (S802) von Informationen über eine dedizierte Kanalressource eines Netzwerks an ein Gateway (72) unter Verwendung einer zweiten Ressourcenkonfigurationsmeldung; und
Übertragen der Anwendungsdaten von einem Terminal zum Gateway unter Verwendung des dedizierten Kanals einer Luftschnittstelle und eines dedizierte Kanals eines Netzwerks.

10. Verfahren nach Anspruch 9, wobei:
die dedizierte Kanalressource der Luftschnittstelle eine Zeit-Frequenz-Ressource und eine Link-Ressource umfasst.

11. Verfahren nach Anspruch 9 oder 10, vor dem Zuweisen einer dedizierten Kanalressource der Luftschnittstelle an die Basisstation (71) gemäß Informationen in einer Richtliniendatenbank und dem Senden von Informationen über die dedizierte Kanalressource der Luftschnittstelle an die Basisstation (71) unter Verwendung einer ersten Ressourcenkonfigurationsmeldung, ferner umfassend:
Sammeln von Gebühreninformationen des dedizierten Kanals einer Luftschnittstelle und Speichern der Gebühreninformationen in der Richtlinien-Datenbank, wobei die Gebühreninformationen des dedizierten Kanals einer Luftschnittstelle Nutzungsdauerinformationen und Bandbreiteninformationen des dedizierten Kanals einer Luftschnittstelle umfassen; und
wenn die Ressourcenkonfigurationsanforderung der Basisstation empfangen wird, Zuweisen der dedizierten Kanalressource der Luftschnittstelle gemäß den Gebühreninformationen des dedizierten Kanals einer Luftschnittstelle und einer voreingestellten Zuweisungsrichtlinie in der Richtlinien-Datenbank.

12. Verfahren zur Ressourcenzuweisung nach einem der Ansprüche 9-11, ferner umfassend:
Empfangen (S900), durch ein erstes Empfangsmodul (40) einer Netzwerksteuerung (70), einer Ressourcenkonfigurationsanforderung für einen dedizierten Kanal eines Netzwerks, der von einem Gateway (72) gesendet wird, wobei die Ressourcenkonfigurationsanforderung einen Ressourcenanforderungstyp und eine Gatewaykennung umfasst;
Zuweisen (S901) einer dedizierten Kanalressource eines Netzwerks an das Gateway (72) gemäß Informationen in einer Richtliniendatenbank durch ein Zuweisungsmodul (41) der Netzwerksteuerung (70), und Senden von Informationen über die dedizierte Kanalressource eines Netzwerks an das Gateway (72) unter Verwendung einer zweiten Ressourcenkonfigurationsmeldung; und
Empfangen (S902) einer vom Gateway (72) zurückgegebenen Bestätigungsmeldung durch ein zweites Empfangsmodul (42) der Netzwerksteuerung (70), und Einstellen der dedizierten Kanalressource eines Netzwerks für das Gateway (72).

13. Verfahren nach Anspruch 12, wobei die dedizierte Kanalressource eines Netzwerks eine Zeit-Frequenz-Ressource und eine Link-Ressource umfasst.

14. Computerspeichermedium, wobei das Computerspeichermedium ein Programm speichert, und wenn es ausgeführt wird, führt das Programm die in einem der Ansprüche 9 bis 13 beschriebenen Schritte durch, wenn es auf einem Computer abläuft.

## Revendications

1. Contrôleur de réseau (70), comprenant :
un module récepteur (10), configuré pour recevoir une demande de configuration de ressources pour un canal dédié d'interface radio, envoyée par une station de base, dans lequel la demande de configuration de ressources comprend un type de demande de ressources et un identifiant de station de base, et le canal dédié est utilisé pour transmettre des données d'application qui sont transmises de manière discontinue et dont la longueur est inférieure à un seuil prédéfini ;
un module d'attribution (11), configuré pour : attribuer une ressource de canal dédié d'interface radio à la station de base selon des informations dans une base de données de politiques, et envoyer des informations concernant la ressource de canal dédié d'interface radio à la station de base en utilisant un premier message de configuration de ressources ; et
un module d'envoi (12), configuré pour : après réception d'un message de confirmation renvoyé par la station de base, envoyer des informations concernant une ressource de canal dédié de réseau à une passerelle en utilisant un deuxième message de configuration de ressources, permettant ainsi la transmission des données d'application d'un terminal à la passerelle en utilisant le canal dédié d'interface radio et un canal dédié de réseau.

2. Contrôleur de réseau (70) selon la revendication 1, dans lequel la ressource de canal dédié d'interface radio comprend une ressource temps-fréquence et une ressource de liaison.

3. Contrôleur de réseau (70) selon les revendications 1 ou 2, dans lequel le contrôleur de réseau (70) comprend en outre :
un module de collecte de statistiques (13), configuré pour collecter des informations de taxation du canal dédié d'interface radio et sauvegarder les informations de taxation dans la base de données de politiques, dans lequel les informations de taxation du canal dédié d'interface radio comprennent des informations de durée d'utilisation et des informations de largeur de bande d'utilisation du canal dédié d'interface radio ; dans lequel
le module d'attribution (11) est en outre configuré pour attribuer la ressource de canal dédié d'interface radio selon les informations de taxation du canal dédié d'interface radio et une politique d'attribution prédéfinie dans la base de données de politiques.

4. Système, comprenant le contrôleur de réseau (70) selon l'une quelconque des revendications précédentes 1 à 3, une station de base (71), une passerelle (72) et un terminal (73), dans lequel
la station de base (71) est configurée pour : mapper un canal dédié d'interface radio sur un canal dédié de réseau, et avertir le terminal (73) des informations de configuration du canal dédié d'interface radio ;
le terminal (73) est configuré pour envoyer à la station de base (71), en utilisant le canal dédié d'interface radio et le canal dédié de réseau, des données d'application qui sont transmises de manière discontinue et dont la longueur est inférieure à un seuil prédéfini ; et
la passerelle (72) est configurée pour : recevoir les données d'application retransmises par la station de base (71), et transmettre les données d'application à un fournisseur de services.

5. Système selon la revendication 4, dans lequel le contrôleur de réseau (70) comprend :
un premier module récepteur (40), configuré pour recevoir une demande de configuration de ressources pour un canal dédié de réseau, envoyée par la passerelle, dans lequel la demande de configuration de ressources comprend un type de demande de ressources et un identifiant de passerelle ;
un module d'attribution (41), configuré pour : attribuer la ressource de canal dédié de réseau à la passerelle selon des informations dans une base de données de politiques, et envoyer des informations concernant la ressource de canal dédié de réseau à la passerelle en utilisant un deuxième message de configuration de ressources ; et
un deuxième module récepteur (42), configuré pour : recevoir un message de confirmation renvoyé par la passerelle, et configurer la ressource de canal dédié de réseau pour la passerelle.

6. Système selon la revendication 5, dans lequel la ressource de canal dédié de réseau comprend une ressource temps-fréquence et une ressource de liaison.

7. Système selon les revendications 5 ou 6, dans lequel le contrôleur de réseau (70) comprend en outre :
un module de collecte de statistiques (43), configuré pour collecter des informations de taxation du canal dédié de réseau et sauvegarder les informations de taxation dans la bibliothèque de blocs de données de politiques, dans lequel le module d'attribution (41) est en outre configuré pour ajuster l'attribution de la ressource de canal dédié de réseau selon les informations de taxation du canal dédié de réseau et une politique d'attribution prédéfinie dans la base de données de politiques.

8. Système selon l'une quelconque des revendications 5 à 7, dans lequel le module d'attribution (41) est en outre configuré pour : ajuster, selon la ressource de canal dédié de réseau attribuée à la passerelle, une ressource de canal dédié d'interface radio attribuée à la station de base.

9. Procédé d'attribution de ressources, comprenant les étapes consistant à :
recevoir (S800) une demande de configuration de ressources pour un canal dédié d'interface radio, envoyée par une station de base (71), dans lequel la demande de configuration de ressources comprend un type de demande de ressources et un identifiant de station de base, et le canal dédié est utilisé pour transmettre des données d'application qui sont transmises de manière discontinue et dont la longueur est inférieure à un seuil prédéfini ;
attribuer (S801) une ressource de canal dédié d'interface radio à la station de base (71) selon des informations dans une base de données de politiques, et envoyer des informations concernant la ressource de canal dédié d'interface radio à la station de base (71) en utilisant un premier message de configuration de ressources ;
après réception d'un message de confirmation renvoyé par la station de base (71), envoyer (S802) des informations concernant une ressource de canal dédié de réseau à une passerelle (72) en utilisant un deuxième message de configuration de ressources ; et
transmettre, en utilisant le canal dédié d'interface radio et un canal dédié de réseau, les données d'application d'un terminal à la passerelle.

10. Procédé selon la revendication 9, dans lequel la ressource de canal dédié d'interface radio comprend une ressource temps-fréquence et une ressource de liaison.

11. Procédé selon les revendications 9 ou 10, avant l'attribution d'une ressource de canal dédié d'interface radio à la station de base (71) selon des informations dans une base de données de politiques, et l'envoi d'informations concernant la ressource de canal dédié d'interface radio à la station de base (71) en utilisant un premier message de configuration de ressources, comprenant en outre les étapes consistant à :
collecter des informations de taxation du canal dédié d'interface radio, et sauvegarder les informations de taxation dans la base de données de politiques, dans lequel les informations de taxation du canal dédié d'interface radio comprennent des informations de durée d'utilisation et des informations de largeur de bande d'utilisation du canal dédié d'interface radio ; et
lorsque la demande de configuration de ressources de la station de base est reçue, attribuer la ressource de canal dédié d'interface radio selon les informations de taxation du canal dédié d'interface radio et une politique d'attribution prédéfinie dans la base de données de politiques.

12. Procédé d'attribution de ressources selon l'une quelconque des revendications 9 à 11, comprenant en outre les étapes consistant à :
recevoir (S900), par un premier module récepteur (40) d'un contrôleur de réseau (70), une demande de configuration de ressources pour un canal dédié de réseau, envoyée par une passerelle (72), dans lequel la demande de configuration de ressources comprend un type de demande de ressources et un identifiant de passerelle ;
attribuer (S901), par un module d'attribution (41) du contrôleur de réseau (70), une ressource de canal dédié de réseau à la passerelle (72) selon des informations dans une base de données de politiques, et envoyer des informations concernant la ressource de canal dédié de réseau à la passerelle (72) en utilisant un deuxième message de configuration de ressources ; et
recevoir (S902), par un deuxième module récepteur (42) du contrôleur de réseau (70), un message de confirmation renvoyé par la passerelle (72), et configurer la ressource de canal dédié de réseau pour la passerelle (72).

13. Procédé selon la revendication 12, dans lequel la ressource de canal dédié de réseau comprend une ressource temps-fréquence et une ressource de liaison.

14. Support de stockage informatique, dans lequel le support de stockage informatique stocke un programme et, en cours d'exécution, le programme effectue les étapes décrites dans l'une quelconque des revendications 9 à 13 lorsqu'il est exécuté sur un ordinateur.
